# EUROPÄISCHE PATENTSCHRIFT

(11) **EP 1 103 020 B1**
(45) Veröffentlichungstag und Bekanntmachung des Hinweises auf die Patenterteilung: **25.06.2003**
(21) Anmeldenummer: 99932657.2
(22) Anmeldetag: 07.05.1999
(51) Int. Cl.: G05B 19/05

(54) **INTELLIGENTE STEUERUNG**
INTELLIGENT CONTROL
COMMANDE INTELLIGENTE

(30) Priorität: 06.08.1998 DE 19835506
(43) Veröffentlichungstag der Anmeldung: 30.05.2001
(73) Patentinhaber: Moeller GmbH, 53115 Bonn (DE)
(72) Erfinder: HÖGENER, Jürgen, D-53859 Niederkassel (DE); DUNG, Olaf, D-53773 Hennef (DE); BAUERFEIND, Dieter, D-53177 Bonn (DE)
(86) Internationale Anmeldenummer: DE9901382
(87) Internationale Veröffentlichungsnummer: WO00008530

(56) Entgegenhaltungen:
- EP-A- 0 386 260
- WO-A-89/01201
- WO-A-97/04367
- WO-A-99/28794
- DE-A- 3 339 796
- DE-A- 3 513 677
- DE-A- 3 533 034
- DE-A- 19 812 423
- DE-U- 29 710 751

## Beschreibung

Die Erfindung betrifft eine programmierbare elektrische Steuerung, insbesondere für ein elektrisches Schaltgerät bzw. eine speicherprogrammierbare Steuerung in der eine derartige Steuerung realisiert ist, nach dem Oberbegriff des unabhängigen Anspruchs.

Es sind bereits verschiedene Steuergeräte bekannt (z.B. ‴EASY 412-DC-R... / EASY 412-AC-R... / Steuerrelais", Druckvermerk: 04/98 AWB 2528-1316 D, erschienen: 05/98, der Firma Klöckner-Moeller). Hierbei handelt es sich um ein intelligentes Steuerrelais mit Signaleingängen, Signalausgängen und integrierter Bedien- und Anzeigeeinheit zur Durchführung von kleineren Steuerungsaufgaben, insbesondere im Bereich des Maschinen- und Anlagenbaus und in der Hausinstallationstechnik.

Femer sind aus dem Bereich der Niederspannungsschaltgeräte bereits parametrierbare intelligente Schaltgeräte wie Leistungsschalter bekannt, die zum Zwecke der Parametrierung ebenfalls eine Bedien- und Anzeigeeinheit aufweisen.

Des Weiteren offenbart DE 297 10 751 U1 ein Programmiergerät bei dem eine Parametriermaske oder eine formulierte Automatisierungsaufgabe als Funktionsplan, Anweisungsliste beziehungsweise Kontaktplan darstellbar ist.

Durch die WO 89/01201 A wird eine Anzeige- und Bedieneinheit offenbart, die mit einem Controller derart zusammenwirkt, dass funktionsrelevante Daten ausgewählt und angezeigt werden können.

Die DE 35 33 034 A1 beschreibt ein speicherprogrammierbares Steuergerät mit einem Programmiergerät zum Eingeben eines Anwenderprogramms. Dabei kann die Eingabe des Anwenderprogramms über ein Anzeigefeld angezeigt werden.

In der WO 97/04367 wird ein Mikrocomputer beschrieben, der derart ausgebildet ist, dass er Steuerungsanweisungen einer Steuerung verarbeiten kann. Darüber hinaus ist über eine Schnittstelle ein Bildschirm ankoppelbar auf welchem insbesondere eine Übersicht über einen zu steuemden Prozess abgebildet werden kann.

Der Erfindung liegt die Aufgabe zugrunde, eine Steuerung der eingangs beschriebenen Art zu schaffen, die eine deutlich verbesserte Benutzerinformation gewährleistet.

Diese Aufgabe wird durch die Merkmale des unabhängigen Anspruchs gelöst.

Durch die erfindungsgemäße Steuerung wird es dem Benutzer ermöglicht, frei editierbare Texte über eine automatische Auswahl zusammenzustellen und während des Programmablaufs bzw. während des Betriebes der Steuerung, bei einer Zustandsänderung eines körperlichen Kontaktes (z.B. Relais- bzw. Spulenkontakt wie Signaleingang und Signalausgang), bzw. einer Zustandsänderung eines logischen Kontaktes innerhalb eines Anwenderprogramms (z.B. Merker, Timer, Zähler, usw....) diese zur Anzeige auf der Anzeigeeinheit zu bringen.

Ein geeignetes Anwendungsgebiet hierfür stellen z.B. Fehlermeldungen dar, die bisher bei derartigen Geräten entweder über externe Intelligenz via Bussystem in einer Leitwarte angezeigt und ggf. dokumentiert werden oder aber direkt am Gerät lediglich in der Form, daß erkennbar ist, ob ein Gerät z.B. ausgelöst hat oder nicht. Durch die Erfindung ist somit z.B. direkt vor Ort, unmittelbar am Gerät eine freie Textzusammenstellung komfortabel realisierbar und damit beispielsweise eine ausführliche Fehlerbeschreibung anzeigbar. Darüber hinaus wird es ermöglicht, Sollwert- und Istwert-Zustände der anzeigbaren realen und/oder logischen Kontakte anzuzeigen bzw. in den editierten Text mit einzubinden.
Weitere Vorteile und Ausführungsformen der Erfindung sind in den Unteransprüchen und in der folgenden Figurenbeschreibung enthalten. Es zeigen:
- Fig. 1: ein Logikrelais in einer Draufsicht, und
- Fig. 2: eine schematische Darstellung der Struktur einzelner Speicherbereiche im Zusammenwirken mit der Anzeigeeinheit.

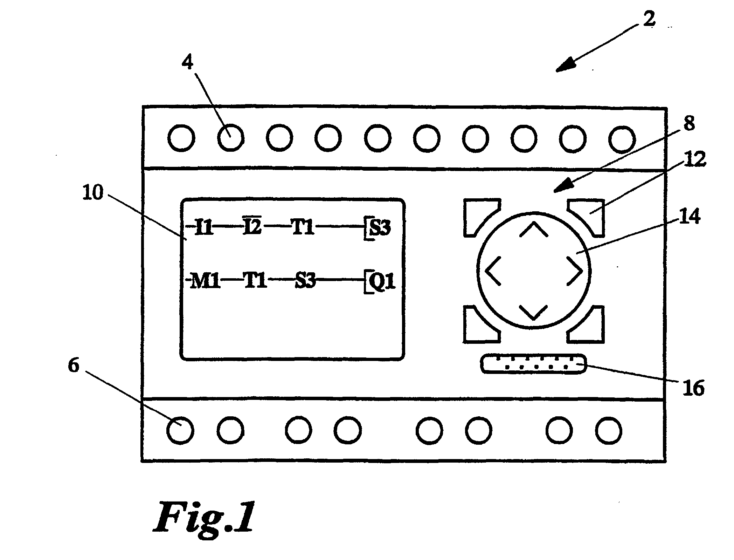

Die Fig. 1 zeigt eine erste bevorzugte Ausführung der Erfindung in Form einer speicherprogrammierbaren Kleinsteuerung (bzw. Logikrelais) mit einem Gehäuse 2 und mit einer Reihe von Signaleingängen 4 und Signalausgängen 6, einer Bedieneinheit 8 und einer Anzeigeeinheit 10 (Bildschirm, Display). Die programmierbare Steuerung schaltet unter Kontrolle eines Anwenderprogramms und in Abhängigkeit vom Zustand der Signaleingänge 4 den Stromfluß zwischen den Signaleingängen 4 und den Signalausgängen 6. Das Programm ist mittels Bedieneinheit 8, die vorzugsweise aus vier Bedientasten 12 und einer Mehrfunktionstaste 14 besteht, in die Recheneinheit bzw. Rechen-Speichereinheit (z.B. Mikrocontroller) der Steuerung eingebbar. Die Eingabe eines Programms und dessen Programmablauf sind auf dem Bildschirm 10 beobachtbar, wobei während der Programmierung eine menügeführte Benutzeroberfläche und während des Betriebs (Ablauf des Anwenderprogramms) die Zustandsanzeige der Signaleingänge 4 und der Signalausgänge 6 der Steuerung und/oder die Zustandsanzeige von logischen Kontakten interner Funktionsbausteine und/oder die Zustandsanzeige von Parametem (Sollwerte, Istwerte) von Funktionsbausteinen möglich ist.

Die Programmierung der erfindungsgemäßen Steuerung erfolgt durch die Eingabe von einzelnen Schaltplansymbolen zu Strompfaden. Hierfür stehen dem Benutzer Eingabefelder für die Eingabe von Schaltplansymbolen zur Verfügung:
1. Kontaktfelder für die Eingabe von: Signaleingängen I; Signalausgängen Q; Merkern M; Funktionsbausteinen: Zähler C, Uhr T, Zeitrelais, usw.;
2. Spulenfelder für die Eingabe von: Signalausgängen Q, Merkem M, Funktionsbausteinen, usw.
3. Verbindungsfelder für die Eingabe von Verbindungselementen, die die einzelnen Kontakt- und Spulenfelder untereinander zu Strompfaden verbinden.

Erfindungsgemäß wird ein neuer Operandentyp bzw. Kontakttyp geschaffen, dem ein frei editierbarer Speicherbereich der Speichereinheit zuordenbar ist, wodurch der Inhalt des Speicherbereichs bei einer Zustandsänderung des Kontaktes während des Programmablaufs auf dem Bildschirm des Gerätes anzeigbar ist.

Die Fig. 1 zeigt beispielhaft zwei programmierte Strompfade, wobei in dem ersten Strompfad zwei Signaleingänge (Schließer I1, Öffner I2) in Serie zu einem Kontakt eines Zeitbausteins (Schließer T1) geschaltet sind und einem, gemäß der Erfindung mit frei editierbarem Text hinterlegbaren, Spulenkontakt (Relaiskontakt S3) zugeordnet sind. Im zweiten Strompfad ist der Spulenkontakt (als Schließer S3) in Serie mit dem Kontakt eines Merkers (Schließer M1) und dem Kontakt des Zeitbausteins (Schließer T1) einem Signalausgang (Spulenkontakt Q1) zugeordnet. Dem Kontakt S3 ist erfindungsgemäß ein frei editierbarer Speicherbereich zugeordnet. Dieser Speicherbereich kann vom Anwender beliebig beschrieben (editiert) werden. Hier kann ein beliebiger Text eingegeben und anschließend durch Zustandswechsel des Kontaktes aktiviert und angezeigt werden.
Für die freie Texteingabe ist ein nicht flüchtiger Speicherbereich A (z.B.E²PROM, Flash) vorgesehen, in dem ein ASCII-Zeichensatz hinterlegt ist. Die Eingabe von Text erfolgt dann über die Bedieneinheit 8 in einem Scroll-Auswahlverfahren, wobei der Zeichensatz in einem Text-Editierungs-Menü über die Mehrfunktionstaste 14 gescrollt werden kann und das jeweils gewünschte Zeichen durch Betätigung einer Bedientaste 12 bestätigt und ausgewählt werden kann.

Es können jedoch auch Sollwert- und/oder Istwert-Zustands-Informationen hinterlegt und zur Anzeige gebracht werden. Zur Hinterlegung dieser Informationen ist ein nicht flüchtiger Speicherbereich B (z.B. E²PROM, Flash) und ein flüchtiger Speicherbereich B' (z.B. RAM) vorgesehen.
Auch für die Hinterlegung der Kontakt-Zustands-Informationen (sowohl ‴logische Kontakte wie Timer, Zähler,... als auch körperliche Kontakte, wie Signaleingänge oder Signalausgänge) ist je nach Informationsart ein nicht flüchtiger Speicherbereich C und/oder ein flüchtiger Speicherbereich C' vorhanden.

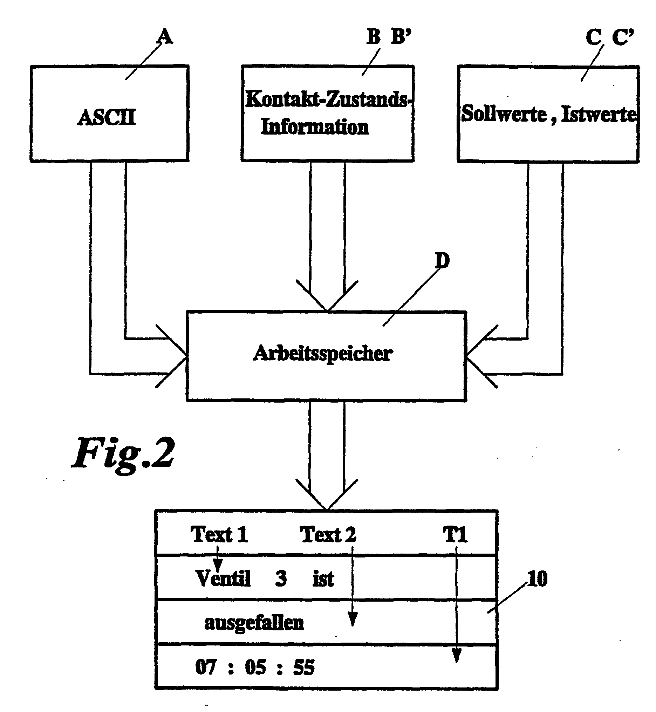

Die Fig. 2 veranschaulicht in schematischer Weise die Art der Hinterlegung der Informationen, die zur Anzeige gebracht werden sollen, falls sich eine entsprechende Kontakt-Zustandsänderung ergibt. Je nach gewünschter Information werden hierfür die jeweiligen Daten aus den Speicherbereichen A-C in den Arbeitsspeicher D (z.B. RAM) der Steuerung geladen und von dort auf dem Bildschirm 10 zur Anzeige gebracht.

Erfährt z.B. der texteditierbare Kontakt S3 (Fig. 1) eine Zustandsänderung, so wird der Bildschirm 10 in einen Text-Anzeigemodus geschaltet, in dem der zuvor editierte Text dann zur Anzeige gebracht wird (Fig. 2). In einer bevorzugten Ausführungsform der Erfindung sind einem Kontakt S mehrere editierbare Speicherbereiche zuordenbar, wodurch dem Kontakt S verschiedene Bildschirminhalte (Text, Signalzustände, Sollwerte/lstwerte) zuordenbar sind. Die hinterlegten Bildschirminhalte (Speicherinhalte) können in einem automatischen Scroll-Auswahlverfahren, in dem die Inhalte der verschiedenen Speicherbereiche in einem automatisch ablaufenden Scroll-Ablauf mit kurzen Pausenzeiten für eine manuelle Auswahlbestätigung des Benutzers, ausgewählt werden.
Die vorliegende Erfindung ist nicht auf programmierbare Steuergeräte, wie das zuvor beschriebene beschränkt, sondem umfaßt jegliche intelligenten elektrischen Einrichtungen, insbesondere auch elektrische Schaltgeräte wie Leistungsschalter, Motorschutzschalter, Motorschutzrelais, Schütze, Frequenzumrichter oder dergleichen. Derartige elektrische Schaltgeräte enthalten erfindungsgemäß eine intelligente Steuerung mit einer Zentraleinheit (z.B. Mikrocontroller) und einer Speichereinheit, wobei die Schaltgeräte mit einem Bildschirm 10 und mit Eingabemitteln 8, 12, 14 verbunden bzw. verbindbar sind. Die Schaltgeräte besitzen also entweder einen integrierten Bildschirm 10, z.B. in Form eines Flüssigkristalldisplays oder dergleichen, oder aber eine Schnittstelle für den Anschluß eines Bildschirms sowie integrierte Eingabemittel 8, 12, 14, z.B. in Form einer Tastatur, oder aber eine Schnittstelle für den Anschluß von Eingabemitteln. Bei derartigen Geräten werden in der Regel körperliche Kontakte angezeigt und mit Speicherbereichen für editierbare Texte und/oder Kontaktzustandsinformationen hinterlegt. Mit Vorteil sind den körperlichen Kontakten Zustandserfassungsmittel in Form von Sensoren oder dergleichen zugeordnet, die mit der Steuerung verbunden sind. Beispielsweise kann so auch der Zustand eines verschweißten Kontaktes erfaßt und mit einer ausführlichen Fehlermeldung zur Anzeige gebracht werden. Somit wird dann nicht ausschließlich die tatsächliche Zustandsänderung des Kontaktes erfaßt, sondern eine den Kontakt betreffende Zustandsänderung des Schaltgerätes erfaßt und zur Anzeige gebracht.

## Patentansprüche

1. Programmierbare Steuerung mit einer intelligenten Zentraleinheit, einer Speichereinheit, einem Bildschirm (10), einer Eingabeeinheit (8) und mit Signaleingängen (4) und Signalausgängen (6),
- wobei die Zentraleinheit, der Bildschirm (10), die Eingabeeinheit (8), die Signaleingänge (4) und Signalausgänge (6) in einem gemeinsamen Gehäuse (2) untergebracht sind und
- wobei Schaltfunktionen durch den Benutzer über eine menügeführte Benutzeroberfläche auf dem Bildschirm (10) programmierbar sind und
- wobei die programmierbare Steuerung unter Kontrolle eines Anwenderprogramms und in Abhängigkeit vom Zustand der Signaleingänge (4) den Stromfluß zwischen den Signaleingängen (4) und den Signalausgängen (6) schaltet und
- wobei einem mit programmtechnischen Mitteln verschaltbaren und durch den Bildschirm (10) anzeigbaren, körperlichen und/oder logischen Kontakt (S) ein Speicherbereich der Speichereinheit zuordenbar ist,
**dadurch gekennzeichnet, daß** die programmierbare Steuerung derart ausgebildet ist, dass
- dem mit den programmtechnischen Mitteln verschaltbaren Kontakt (S) mehrere frei editierbare Speicherbereiche (A, B, B', C, C') zuordenbar sind,
- die verschiedenen Speicherbereiche (A, B, B', C, C') über eine automatische Auswahl zuordenbar sind derart, daß die verschiedenen Speicherbereiche (A, B, B', C, C') in einem automatisch ablaufenden Scroll-Ablauf mit kurzen Pausenzeiten für eine manuelle Auswahlbestätigung des Benutzers auswählbar sind und
- der Inhalt des Speicherbereichs (A, B, B', C, C'), bei Zustandsänderung des Kontaktes (S) während des Programmablaufes, auf dem Bildschirm (10) anzeigbar ist.

2. Steuerung nach Anspruch 1,
**dadurch gekennzeichnet, daß** der Speicherbereich mit Sollwert- und/oder Istwert-Zustands-Informationen belegbar ist.

3. Steuerung nach einem der vorherigen Ansprüche,
**dadurch gekennzeichnet, daß** der Speicherbereich mit frei definierbarem Text belegbar ist.

4. Steuerung nach einem der vorherigen Ansprüche,
**dadurch gekennzeichnet, daß** der Speicherbereich über die Eingabemittel (8, 12, 14) editierbar ist.

5. Steuerung nach einem der vorherigen Ansprüche,
**dadurch gekennzeichnet, daß** einem Kontakt (S) mehrere Speicherbereiche (A, B, B', C, C') zuordenbar sind.

6. Steuerung nach einem der vorherigen Ansprüche,
**dadurch gekennzeichnet, daß** der Bildschirm (10) durch eine Zustandsänderung des beziehungsweise jeden Kontaktes (S) in einen Text-Anzeigemodus umschaltbar ist, so dass der zuvor editierte Text zur Anzeige gebracht wird.

## Claims

1. Programmable controller having an intelligent central unit, a memory unit, a screen (10), an input unit (8) and having signal inputs (4) and signal outputs (6),
- where the central unit, the screen (10), the input unit (8), the signal inputs (4) and signal outputs (6) are accommodated in a common housing (2), and
- where switching functions can be programmed by the user using a menu-controlled user interface on the screen (10), and
- where the programmable controller switches the flow of current between the signal inputs (4) and the signal outputs (6) under the control of a user program and on the basis of the state of the signal inputs (4), and
- where a physical and/or logical contact (S) which can have programming means connected to it and can be displayed by the screen (10) can be assigned a memory area in the memory unit,
**characterized in that** the programmable controller is in a form such that
- the contact (S) which can have the programming means connected to it can be assigned a plurality of freely editable memory areas (A,B,B',C,C'),
- the various memory areas (A,B,B',C,C') can be assigned by means of automatic selection such that the various memory areas (A,B,B',C,C') can be selected in an automatically executed scroll procedure with short break times for manual selection confirmation by the user, and
- the content of the memory area (A,B,B',C,C') can be displayed on the screen (10) when there is a state change on the contact (S) during program execution.

2. Controller according to Claim 1,
**characterized in that** the memory area can have setpoint and/or actual-value state information put into it.

3. Controller according to one of the preceding claims,
**characterized in that** the memory area can have freely definable text put into it.

4. Controller according to one of the preceding claims,
**characterized in that** the memory area can be edited using the input means (8, 12, 14).

5. Controller according to one of the preceding claims,
**characterized in that** a contact (S) can be assigned a plurality of memory areas (A,B,B',C,C').

6. Controller according to one of the preceding claims,
**characterized in that** the screen (10) can be changed over to a text display mode by a state change on the or on each contact (S), so that the previously edited text is displayed.

## Revendications

1. Commande programmable avec une unité centrale intelligente, une unité de mémoire, un écran (10), une unité de saisie (8) et avec des entrées de signaux (4) et des sorties de signaux (6),
- l'unité centrale, l'écran (10), l'unité de saisie (8), les entrées de signaux (4) et les sorties de signaux (6) étant logés dans un boîtier commun (2) et
- les fonctions de commutation étant programmables par l'utilisateur par l'intermédiaire d'une surface utilisateur pilotée par menus sur l'écran (10) et
- la commande programmable commutant la circulation du courant entre les entrées de signaux (4) et les sorties de signaux (6) sous commande d'un programme utilisateur et en fonction de l'état des entrées de signaux (4) et
- un contact matériel et/ou logique (S) commutable par des moyens techniques de programme et pouvant être indiqué sur l'écran (10) pouvant être relié à une zone de mémoire de l'unité de mémoire,
**caractérisée en ce que** la commande programmable est réalisée de telle sorte que
- plusieurs zones de mémoire (A, B, B', C, C') pouvant être éditées librement peuvent être reliées au contact (S) commutable par des moyens techniques de programme,
- les différentes zones de mémoire (A, B, B', C, C') pouvant être reliées par l'intermédiaire d'une sélection automatique sont telles que les différentes zones de mémoire (A, B, B', C, C') peuvent être sélectionnées pour une confirmation manuelle de la sélection de l'utilisateur dans un déroulement par scroll se déroulant automatiquement avec de courtes pauses et
- le contenu de la zone de mémoire (A, B, B', C, C') peut être représenté sur l'écran (10) lors de la modification de l'état du contact (S) pendant le déroulement du programme.

2. Commande selon la revendication 1, **caractérisée en ce que** la zone de mémoire peut être occupée par des informations d'état sur la valeur de consigne et/ou la valeur courante.

3. Commande selon une des revendications précédentes, **caractérisée en ce que** la zone de mémoire peut être occupée par du texte pouvant être défini librement.

4. Commande selon une des revendications précédentes, **caractérisée en ce que** la zone de mémoire peut être éditée par l'intermédiaire des moyens de saisie (8, 12, 14).

5. Commande selon une des revendications précédentes, **caractérisée en ce que** plusieurs zones de mémoire (A, B, B', C, C') peuvent être reliées à un contact (S).

6. Commande selon une des revendications précédentes, **caractérisée en ce que** l'écran (10) peut être commuté dans un mode de visualisation de texte par une modification de l'état respectif de chaque contact (S) de manière à visualiser le texte édité antérieurement.
